Europäisches Patentamt

European Patent Office

Office européen des brevets

(19)

(11) Veröffentlichungsnummer: **0 312 719 B1**

(12) **EUROPÄISCHE PATENTSCHRIFT**

(45) Veröffentlichungstag der Patentschrift: **27.12.91**

(51) Int. Cl.⁵: **F16F 13/00, F16F 9/46**

(21) Anmeldenummer: **88112440.8**

(22) Anmeldetag: **01.08.88**

(54) **Gummilager.**

(30) Priorität: **21.10.87 DE 3735553**

(43) Veröffentlichungstag der Anmeldung:
**26.04.89 Patentblatt 89/17**

(45) Bekanntmachung des Hinweises auf die
Patenterteilung:
**27.12.91 Patentblatt 91/52**

(84) Benannte Vertragsstaaten:
**DE ES FR GB IT SE**

(56) Entgegenhaltungen:
**EP-A- 0 137 112       EP-A- 0 137 477**
**EP-A- 0 183 039       EP-A- 0 222 351**
**DE-A- 3 501 260       GB-A- 2 111 171**

(73) Patentinhaber: **Firma Carl Freudenberg**
**Höhnerweg 2-4**
**W-6940 Weinheim/Bergstrasse(DE)**

(72) Erfinder: **Koczar, Peter**
**Kurfpfalzstrasse 2**
**W-6905 Schriesheim(DE)**
Erfinder: **Ihrig, Dieter, Dr. rer.nat.**
**Ketscher Ring 12**
**W-6800 Mannheim 81(DE)**
Erfinder: **Kurr, Klaus, Dr.**
**Brunnengasse 9**
**W-6940 Weinheim-Hohensachsen(DE)**

## Beschreibung

Die Erfindung betrifft ein Gummilager, bei dem ein Traglager, ein hohlkegeliges Federelement und eine Trennwand einen Arbeitsraum umschließen, bei dem der Arbeitsraum durch eine kanalartig ausgebildete Verbindungsöffnung mit einem nach außen nachgiebig begrenzten Ausgleichsraum verbunden ist und bei dem der Arbeits- und der Ausgleichsraum sowie die Verbindungsöffnung mit einer hydraulischen Flüssigkeit gefüllt sind und das in der Verbindungsöffnung enthaltene Volumen der Flüssigkeit in eine Resonanzschwingung versetzbar ist, wobei die Verbindungsöffnung wenigstens zwei in Reihe geschaltete Teilbereiche umfaßt, die sich beiderseits einer Wand parallel zueinander erstrekken, wobei die Teilbereiche in der gedachten Verlängerung der Wand durch eine eine Richtungsumkehr der strömenden Flüssigkeit bewirkende Übergangszone voneinander getrennt sind und wobei die Übergangszone in Richtung der gedachten Verlängerung der Wand einen Durchlaßquerschnitt aufweist, der eine von dem Durchlaßquerschnitt des in Richtung des Ausgleichsraumes nachgeschalteten Teilbereiches abweichende Größe hat.

Ein solches Gummilager ist aus der EP-A-0 137 477 bekannt. Es kann in bezug auf die Lagerung eines Verbrennungsmotors in einem Kraftfahrzeug zur Anwendung gelangen und hat den Zweck, Schaukelbewegungen des Verbrennungsmotors während der bestimmungsgemäßen Verwendung zu unterdrücken. Eine zwischen dem Arbeits- und dem Ausgleichsraum angeordnete Verbindungsöffnung ist zur Erreichung dieses Zweckes so gestaltet, daß bei Einleitung kritischer Schwingungen eine möglichst große Flüssigkeitsmenge in eine Resonanzbewegung gelangt.

Aus der EP-A-0 137 112 ist ein Gummilager bekannt, bei dem der Arbeits- und der Ausgleichsraum mit einer elektroviskosen Flüssigkeit gefüllt und durch eine Verbindungsöffnung verbunden sind, in der ein elektrisches Feld erzeugt werden kann. Die Viskosität der jeweils in der Verbindungsöffnung befindlichen Flüssigkeit läßt sich hierdurch schnell verändern, was es ermöglicht, die Dämpfungswirkung an die jeweils herrschenden Betriebsverhältnisse anzupassen.

Der Erfindung liegt die Aufgabe zugrunde, ein Gummilager der eingangs genannten Art derart weiterzuentwickeln, daß sich eine gute Dämpfungswirksamkeit in einem wesentlich erweiterten Frequenzbereich ergibt.

Die Aufgabe wird erfindungsgemäß bei einem Gummilager der eingangs genannten Art dadurch gelöst, daß die Flüssigkeit eine Grundviskosität von maximal 500 mPa x s aufweist und daß die Übergangszone zu einer Drosselöffnung verengt ist, die höchstens die halbe Größe des Querschnittes der benachbarten Teilbereiche der Verbindungsöffnung aufweist. Die maximale Dämpfungswirksamkeit läßt sich problemlos einer bestimmten Frequenz in gezielter Weise zuordnen, wenn die Übergangszone eine in gezielter Weise verengte Drosselöffnung aufweist. Die Drosselöffnung ergibt sich, wenn die Übergangszone eine in Strömungsrichtung, d. h. in Fortsetzung der Trennwand zweier nebeneinanderliegender Teilbereiche gemessenen Durchlaßquerschnitt aufweist, der höchstens die halbe Größe des Querschnittes der benachbarten Teilbereiche aufweist. Die Anpassung des Gummilagers an den jeweiligen Anwendungsfall ist durch diese Maßnahme ganz besonders einfach. In dem erfindungsgemäßen Gummilager gelangt eine Flüssigkeit zur Anwendung, die eine Grundviskosität von maximal 500 mPa x s aufweist, wodurch gewährleistet ist, daß die Flüssigkeit trotz der von den Ausführungen nach dem Stand der Technik abweichenden Ausbildung der Verbindungsöffnung in eine Resonanzbewegung versetzt werden kann. Unter dem Begriff des Grundviskosität ist diejenige Viskosität zu verstehen, die die Flüssigkeit bei normaler Gebrauchstemperatur und unter Vermeidung jeglicher äußerer Einflüsse aufweist.

Als normale Gebrauchstemperatur ist beispielsweise bei Verwendung auf dem Kfz-Sektor der Temperaturbereich von - 10°C bis +80°C zu verstehen. Dieser Temperaturbereich ist bei einer Verwendung des erfindungsgemäßen Motorlagers auf dem angesprochenen Sektor in gemäßigten Klimabedingungen im allgemeinen ausreichend. Verwendungen jenseits der angesprochenen Grenzen sind jedoch in Extremfällen ebenfalls denkbar. Sie können es erforderlich machen, die in dem Gummilager enthaltene Flüssigkeit zu temperieren, beispielsweise durch Anbringung eines Heizelementes im Arbeits- und/oder Ausgleichsraum. Beispielsweise die Anbindung an das Heiz- und/oder Kühlsystem eines Verbrennungsmotors ist problemlos möglich. Auch läßt sich die insgesamt erzielte Wirksamkeit des erfindungsgemäßen Motorlagers in bezug auf die Verwendung bei unterschiedlichen Temperaturen vergleichmäßigen und dadurch optimieren.

Die Verbindungsöffnung des Gummilagers weist wenigstens zwei in Reihe geschaltete Teilbereiche auf. Zwischen diesen ist jeweils eine Übergangszone angeordnet, in welche die Teilbereiche im wesentlichen parallel zueinander und aus derselben Richtung kommend einmünden. Das die Verbindungsöffnung bei einer Einfederung des Traglagers in eine Richtung durchströmende Flüssigkeitsvolumen erfährt dadurch in einer jeden Übergangszone eine Richtungsumkehr, was zur Erzielung einer breitbandigen Dämpfungswirkung beiträgt. Störende Schwingungen eines besonders großen Frequenzbereiches lassen sich hierdurch wirksam unterdrücken.

Die Verbindungsöffnung kann in wenigstens einem Teilbereich durch sich parallel zueinander erstreckende Wandungen begrenzt sein, deren Zwischenraum zu einem Spalt verengt ist. Dieser sollte zweckmäßig in Querrichtung eine Breite haben, die wenigstens fünfzehnmal so groß ist wie die Tiefe, wenn die Erzielung einer guten Dämpfungswirkung in dem für die Lagerung von Verbrennungsmotoren besonders wichtigen Bereich zwischen 5 und 20 Hz angestrebt wird.

Desweiteren sollte die die beiden parallel zueinander und aus derselben Richtung kommend in die Übergangszone mündenden Teilbereiche voneinander trennende Wandung von möglichst geringer Dicke sein und in dieser Hinsicht einen Wert nicht überschreiten, der größer ist als die Tiefe jedes der beiderseits angrenzenden Teilbereiche. Sind diese von unterschiedlicher Tiefe, was sich im Hinblick auf die Erzielung von vorteilhaften Effekten empfehlen kann, so ist der Wert desjenigen Teilbereiches zugrundezulegen, der die geringere Tiefe hat.

Die in dem erfindungsgemäßen Gummilager zu Anwendung gelangende Flüssigkeit kann irgendeine der einschlägig verwendeten Flüssigkeiten sein und beispielsweise aus einem Gemisch aus Glykol und Wasser bestehen. Das Betriebsverhalten des Gummilagers ist in diesem Falle unveränderlich, was im Hinblick auf die Funktionssicherheit von großem Vorteil ist. Es besteht bei einer anderen Ausbildung jedoch auch die Möglichkeit, die dynamische Steifigkeit und Dämpfungswirksamkeit des erfindungsgemäßen Gummilagers im eingebauten Zustand ständig zu verändern und den jeweiligen Erfordernissen der Betriebssituation in optimaler Weise anzupassen. Beispielsweise bei einer Verwendung des Gummilagers als Motor- oder Achslager eines Kraftfahrzeuges lassen sich hierdurch in Verbindung mit einer Steuerung deutliche Verbesserungen des Fahrkomforts und der Fahrsicherheit erzielen.

Zur Erreichung dieses Zweckes wird das Gummilager mit einer elektroviskosen Flüssigkeit gefüllt und die Verbindungsöffnung zwischen dem Arbeits- und dem Ausgleichsraum derart ausgebildet, daß die Wandung in wenigstens einem Teilbereich aus einander gegenüberliegenden Elektroden besteht, an die ein elektrisches Spannungspotential anlegbar ist.

Elektroviskose Flüssigkeiten sind hinsichtlich ihres grundsätzlichen Aufbaues aus der EP-A-01 37 112 bekannt. Sie haben in einer Aufbereitung, die für das erfindungsgemäße Gummilager geeignet ist, eine Grundviskosität von maximal 500 mP a x s. Die Viskosität läßt sich, ausgehend von der Grundviskosität, durch Anlegen eines elektrischen Spannungspotentials an die Elektroden wesentlich vergrößern, was ein grundsätzlich verändertes Betriebsverhalten des Gummilagers zur Folge hat. Dieses ist vor allem dadurch charakterisiert, daß sich in dem Frequenzbereich von 1 bis etwa 20 Hz bei angelegter Spannung nahezu keine Dämpfungswirkung ergibt, hingegen eine hervorragende Dämpfungswirkung im selben Frequenzbereich, wenn keine elektrische Spannung an die Elektroden angelegt ist. Die Aktivierung der Dämpfungswirkung, welche stets zu Lasten der erzielten Schwingungsisolierung geht, kann dadurch auf Betriebssituationen beschränkt werden, die gleichbedeutend sind mit einer Gefahr für die Betriebs- oder Verkehrssicherheit des abgestützten Aggregates. Während aller übrigen Betriebssituationen, und das ist der bei weitem überwiegende Teil, kann demgegenüber der Vorteil einer ausgezeichneten Schwingungsisolierung genutzt werden, was beispielsweise in einem Kraftfahrzeug für den Fahrkomfort von großem Vorteil ist.

Des weiteren kann ein störungsbedingter Spannungsausfall bei einer solchen Ausbildung des Gummilagers nicht mehr zum Auftreten kritischer Betriebssituationen führen. In diesem Falle wird vielmehr die große Dämpfungswirksamkeit im niederfrequenten Bereich aktiviert, was das Auftreten von Amplitudenüberhöhungen des schwingenden Maschinenelementes ausschließt.

Die Verbindungsöffnung zwischen dem Arbeits- und dem Ausgleichsraum kann auch so gestaltet sein, daß die Wandungen in wenigstens zwei Teilbereichen durch Elektroden gebildet sind, an die ein voneinander verschiedenes elektronisches Spannungspotential anlegbar ist. Die Isolierwirkung erfährt dadurch eine weitere Verbesserung.

Die einander gegenüberliegenden Wandungen der Verbindungsöffnung bzw. der Teilbereiche können aus quer zu ihrer Erstreckung nachgiebigen Platten bestehen und im wesentlichen parallel zur Richtung der Trennwand alternierend in einem Durchbruch eingreifen, die die Trennwand senkrecht durchdringt. Die Platten können membranartig ausgebildet sein und aus Gummi bestehen. Sie werden zweckmäßig mit ihrem Außenumfang adhäsiv oder durch mechanische Hilfsmittel in dem Durchbruch verankert.

Die Verbindungsöffnung bzw. deren die Teilbereiche begrenzenden Wandungen können auch in einer im wesentlichen hohlzylindrischen Kammer derart angeordnet sein, daß die einzelnen Teilbereiche einander konzentrisch umschließen. Der zentrale Bereich der Trennwand wird bei einer solchen Ausbildung nicht für die Aufnahme der Verbindungsöffnung benötigt und steht für andere Zwecke zur Verfügung.

Es ist beispielsweise möglich, in diesem Bereich eine Entkoppelungsvorrichtung unterzubringen, die der Erzielung verbesserter Isoliereigenschaften in bezug auf hochfrequente Schwingungen dient.Entsprechende Entkoppelungsvorrichtungen sind aus der DE-C- 27 27 244 und aus der DE-C- 30 19 337 bekannt. Sie können gleichwohl die Eigenschaften des erfindungsgemäßen Gummilagers in vorteilhafter Weise noch weiter verbessern.

Der Gegenstand der vorliegenden Erfindung wird nachfolgend anhand der als Anlage beigefügten Zeichnungen weiter verdeutlicht. Es zeigen:

Fig.1    ein Diagramm, welches das Dämpfungsverhalten einer steuerbaren Ausführung des erfindungsgemäßen Gummilagers im angesteuerten Zustand dem Dämpfungsverhalten im nicht angesteuerten Zustand gegenüberstellt;

Fig. 2    ein Diagramm, in welchem die Federeigenschaften der steuerbaren Ausführung nach Fig. 1 im angesteuerten Zustand denjenigen im nicht angesteuerten Zustand gegenübergestellt sind;

Fig. 3    eine nicht steuerbare Ausführung des erfindungsgemäßen Gummilagers in längsgeschnittener Darstellung;

Fig. 4    das Gummilager gemäß Fig. 3 in einer entlang der Linie A-A quergeschnittenen Darstellung;

Fig. 5    eine steuerbare Ausführung des erfindungsgemäßen Gummilagers in längsgeschnittener Darstellung;

Fig. 6    Das Gummilager gemäß Fig. 5 in einer entlang der Linie A-A quergeschnittenen Darstellung;

Fig. 7    eine weitere, steuerbare Ausführung des erfindungsgemäßen Gummilagers in längsgeschnittener Darstellung;

Fig. 8    das Gummilager gemäß Fig. 7 in einer entlang der Linie A-A quergeschnittenen Darstellung.

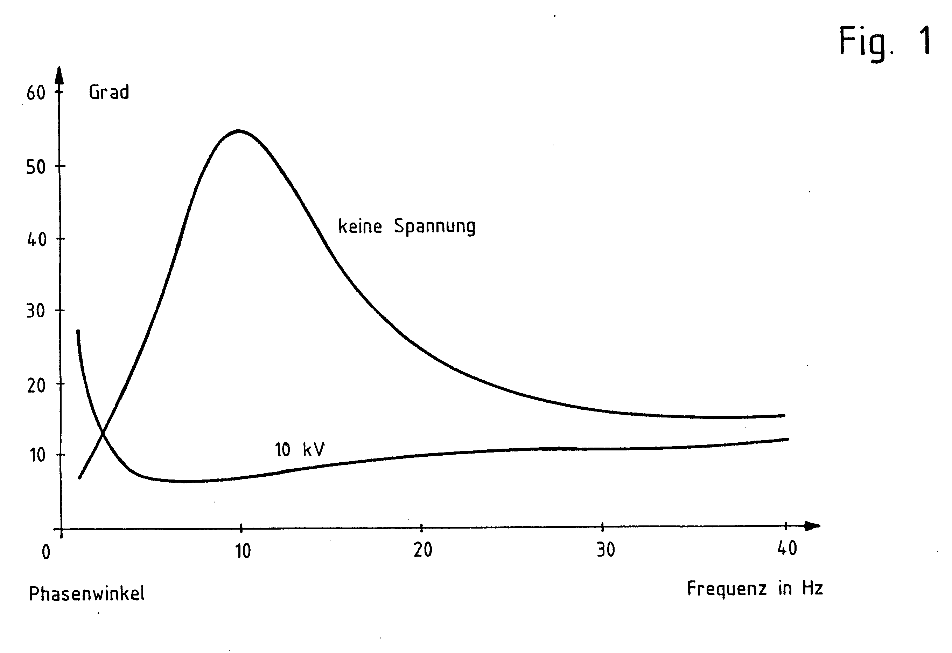

Durch Fig. 1 wird das grundsätzliche Dämpfungsverhalten des erfindungsgemäßen Gummilagers anhand einer steuerbaren Ausführung verdeutlicht. Diese weist dann, wenn an die Elektroden der Verbindungsöffnung des Arbeits- und des Ausgleichsraumes keine Spannung angelegt ist, im Bereich von etwa 12 Hz ein Maximum, welches nach dem Anlegen einer Spannung von 10 kV nahezu völlig verschwindet. Die zuvor vorhandene Dämpfungswirkung ist dann durch eine gute Isolierwirkung ersetzt, wobei es von hervorzuhebendem Vorteil ist, daß die Umschaltung äußerst schnell gelingt und nur Millisekunden erfordert. Kritische Schwingungsausschläge des gelagerten Maschinenelementes lassen sich hierdurch wirksam und kaum merklich unterdrücken, beispielsweise durch taktende Aktivierung. Für den Komfort eines Kraftfahrzeuges ist diese Möglichkeit von großer Bedeutung.

Die in Fig. 1 mit der Bezeichnung "keine Spannung" versehene Kurve ist zugleich repräsentativ für nicht steuerbare Ausführungen des erfindungsgemäßen Gummilagers. Der Bereich, in dem sich eine gute Dämpfungswirkung ergibt, läßt sich je nach Art und Ausbildung der zur Anwendung gelangenden Verbindungsöffnung sowohl hinsichtlich seiner Breite als auch hinsichtlich seiner Höhe modifizieren.

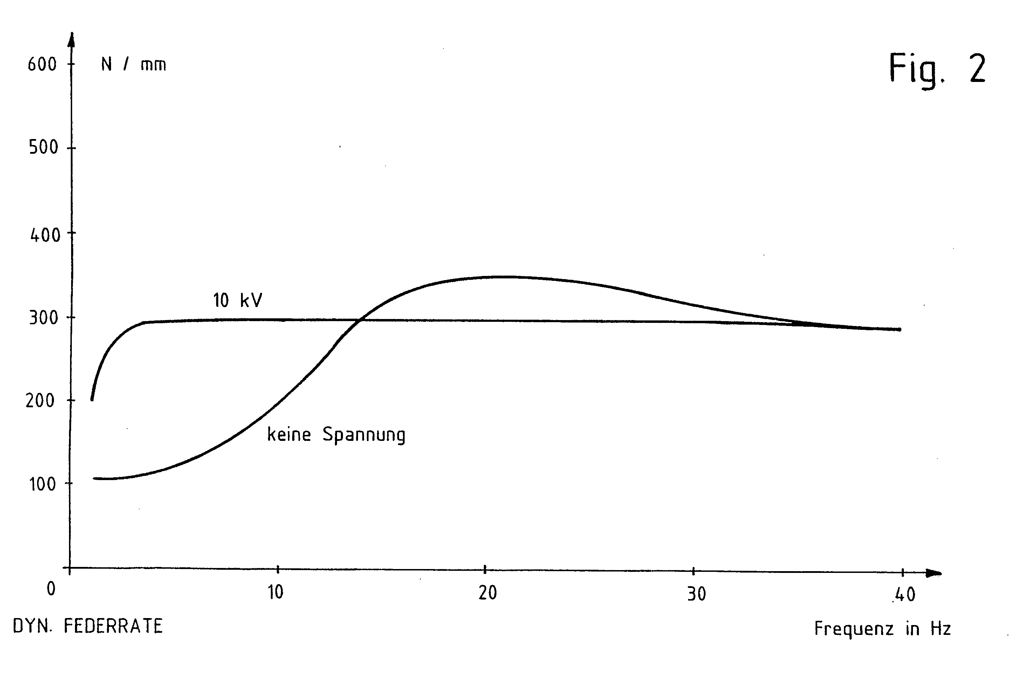

Das in Fig. 2 gezeigte Diagramm beschreibt die Federeigenschaften der vorstehend beschriebenen Ausführung des erfindungsgemäßen Gummilagers im angesteuerten und im nicht angesteuerten Zustand. Es ist zu ersehen, daß die gezeigte Ausführung im Frequenzbereich von etwa 14 Hz eine Sperrfrequenz aufweist, bei der keine Flüssigkeitsbewegung in der Verbindungsöffnung zwischen dem Arbeits- und dem Ausgleichsraum stattfindet. Es zeigt sich, daß die in der Verbindungsöffnung enthaltene Flüssigkeit unterhalb und oberhalb der vorstehend angegebenen Sperrfrequenz ein voneinander abweichendes Bewegungsverhalten aufweist. Dieses hat zur Folge, daß das Gummilager im spannungsfreien Zustand bei Einleitung von Schwingungen einer kleinen Frequenz eine wesentlich niedrigere Federrate aufweist als bei Einleitung von Schwingungen, deren Frequenz oberhalb der Sperrfrequenz liegt. Beide Eigenschaften lassen sich durch Anlegen einer Spannung verändern. Besonders in Erscheinung treten die diesbezüglichen Effekte bei Einleitung von Schwingungen einer Frequenz unterhalb der Sperrfrequenz. Es Zeigt sich, daß in diesem Bereich die dynamische Federrate durch Anlegen einer Spannung an das Motorlager im Extremfalle nahezu verdreifacht werden kann. Beispielsweise das Nickbestreben eines in einem Kraftfahrzeug zur Anwendung gelangenden Verbrennungsmotors beim Bremsen oder Beschleunigen läßt sich hierdurch wirksam unterdrücken.

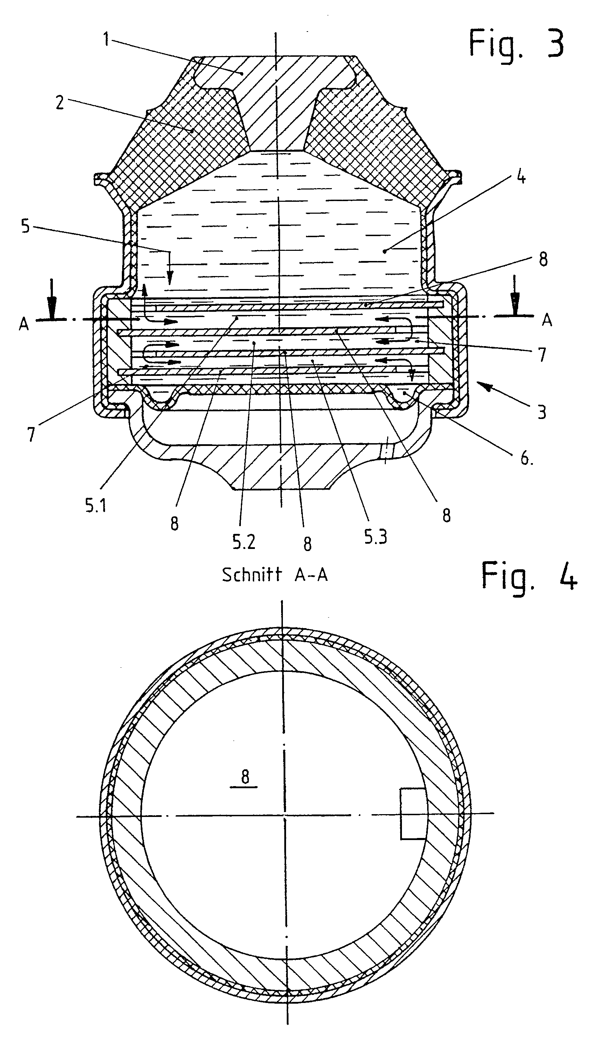

Das in Fig. 3 gezeigte Gummilager umfaßt ein Traglager 1, ein hohlkegeliges Federelement 2 und eine Trennwand 3, die gemeinsam den Arbeitsraum 4 umschließen. Dieser ist durch die die Trennwand 3 durchdringende Verbindungsöffnung 5 mit dem Ausgleichsraum 6 verbunden und ebenso wie letztere mit einer hydraulischen Flüssigkeit gefüllt, beispielsweise mit einem Gemisch aus Glykol und Wasser.

Die Trennwand 3 ist im zentralen Bereich senkrecht von einer zylindrischen Durchbrechung ganz durchdrungen. Diese dient zugleich als Halterung für die Wände 8, welche alternierend von der linken und der rechten Seite ausgehend in die Durchbrechung vorspringen und einander überlappen. Die Wände 8 haben eine geringe Dicke von 2 mm und in diesem Fall einen gegenseitigen Abstand von 4 mm. Sie begrenzen gemeinsam die Teilbereiche 5.1; 5.2; 5.3 der Verbindungsöffnung 5, welche in Reihe hintereinanderliegend angeordnet sind. Zwischen den aufeinanderfolgenden Teilbereichen 5.1. 5.2, 5.3 ist jeweils eine Übergangszone 7 vorgesehen, in welche die Teilbereiche im wesentlichen parallel zueinander und aus derselben Richtung kommend einmünden. Die sich bei einer Einfederung des Traglagers 1 ergebende Strömungsrichtung, welche durch Pfeile angedeutet ist, erfährt hierdurch in jeder der Übergangszonen 7 eine Umlenkung um 180˚. Die Übergangszonen 7 sind zu Drosselöffnungen verengt, die höchstens die halbe Größe des Querschnitts der benachbarten Teilbereiche der Verbindungsöffnung aufweisen. Eine gute Energiedissipation und eine dementsprechende Dämpfungswirksamkeit in einem Frequenzbereich von großer Breite ist hiervon die Folge.

Fig. 4 zeigt das vorstehend beschriebene Gummilager in quergeschnittener Darstellung. Der Schnitt wurde dabei so gelegt, daß eine der Wände 8 der Verbindungsöffnung zu erkennen ist, um auf diese Weise die großflächige Ausbildung derselben zu verdeutlichen.

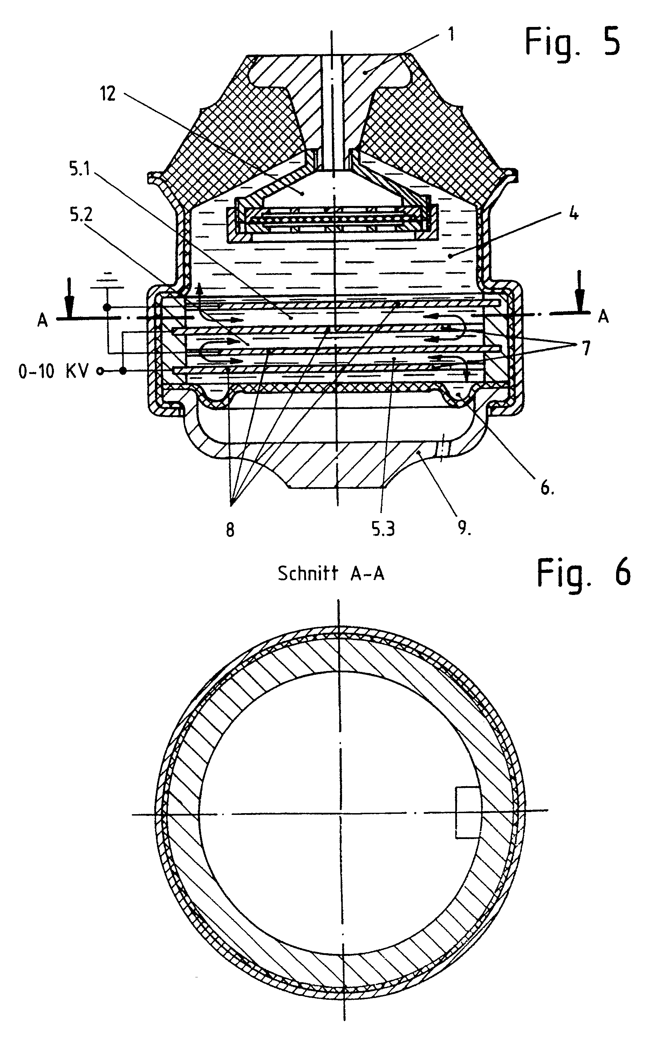

Das in Fig. 5 gezeigte Gummilager ist hinsichtlich seines grundsätzlichen Aufbaues dem vorstehend beschriebenen ähnlich. Es genügt daher, nachfolgend die abweichenden Merkmale herauszustellen.

Das Gummilager gemäß Fig. 5 enthält in dem Arbeitsraum 4 ein elektrisch betätigbares Heizelement, das der Übersichtlichkeit wegen nicht dargestellt ist. Das Heizelement ist so geschaltet, daß die umgebende Flüssigkeit eine Temperatur von wenigstens $+10˚C$ und maximal von $+90˚C$ aufweist. Zweckmäßig gelangt ein Thermostat zur Anwendung, der die Temperatur konstant hält auf einem Niveau von etwa $60˚C$. In Abhängigkeit von der zu erwartenden Umgebungstemperatur kann sich auch eine Kühlung mittels eines Kühlelementes empfehlen. Des weiteren ist das Gummilager gemäß Fig. 5 mit einer an sich bekannten elektroviskosen Flüssigkeit gefüllt. Die elektroviskose Flüssigkeit hat eine Grundviskosität von 350 mPa x s.

Die die Verbindungsöffnung in den aufeinanderfolgenden Teilbereichen begrenzenden Wände 8 sind ebenso wie vorstehend beschrieben ausgebildet und aus Aluminiumblech einer Dicke von 2,0 mm erzeugt. Sie sind elektrisch gegeneinander und gegenüber dem Bodenteil 9 des Gummilagers isoliert und mit elektrischen Anschlüssen versehen, welche alternierend mit beiden Polen einer Spannungsquelle verbindbar sind.

Die interne Schaltung ist dabei so aufgebaut, daß die sich in den einzelnen Teilbereichen 5.1 bis 5.3 der Verbindungsöffnung ergebende Spannungsdifferenz identisch ist. Sie wird im allgemeinen so lange in konstanter Weise aufrecht erhalten, wie die betriebsbedingten Schwingungen des gelagerten Maschinenteiles eine kritische Größe unterschreiten. Treten hingegen Schwingungen auf, die den vorgegebenen Schwellwert überschreiten, dann wird die Spannung vermindert oder unterbrochen mit dem Ergebnis einer Dämpfungswirksamkeit. Die Amplitude der Schwingungen kann dadurch sehr schnell auf einen unkritischen Wert zurückgeführt werden, der das erneute Anlegen einer Spannung gestattet.

Die für das bedarfsweise vorgesehene Ein - und Ausschalten der Dämpfungseinrichtung eines solchen Gummilagers erforderlichen Steuerungen und Sensoren sind nicht Gegenstand der vorliegenden Erfindung. Sie sind im Handel frei verfügbar.

Zur Entkoppelung hochfrequenter Schwingungen von geringer Amplitude ist es bei dem Gummilager nach Fig. 5 vorgesehen, daß an dem Traglager 1 eine flüssigkeitsundurchlässige, in den Arbeitsraum 4 vorspringende Glocke vorgesehen ist. Diese umschließt einen mit der Außenluft kommunizierenden Hohlraum 12, der gegenüber dem Arbeitsraum 4, durch eine zwischen beiderseits vorgelagerten Anschlägen leicht bewegliche Membran abgeschlossen ist. Beispielsweise bei einer Verwendung als Motorlager in einem Kraftfahrzeug läßt sich hierdurch eine Übertragung des Körperschalls von dem Motor auf die Karosserie eines Kraftfahrzeuges wirksam unterdrücken. Eine Anbringung der Membran in der Mündung einer in Richtung des Arbeitsraumes 4 geöffneten Ausnehmung des Traglagers 1 ist ebenfalls möglich. Neben einer Gewichtsersparnis resultiert die Möglichkeit, das Volumen des Arbeitsraumes zu vermindern und Einbauraum zu sparen. Das vorstehend beschriebene Gummilager ist in Fig. 6 quergeschnitten dargestellt. Die Schnittebene entspricht dabei der in Fig. 5 eingetragenen Schnittlinie A-A. Die Darstellung dient insbesondere der Verdeutlichung der gegenständlichen Ausbildung der Wand 8 des Gummilagers gemäß Fig. 5.

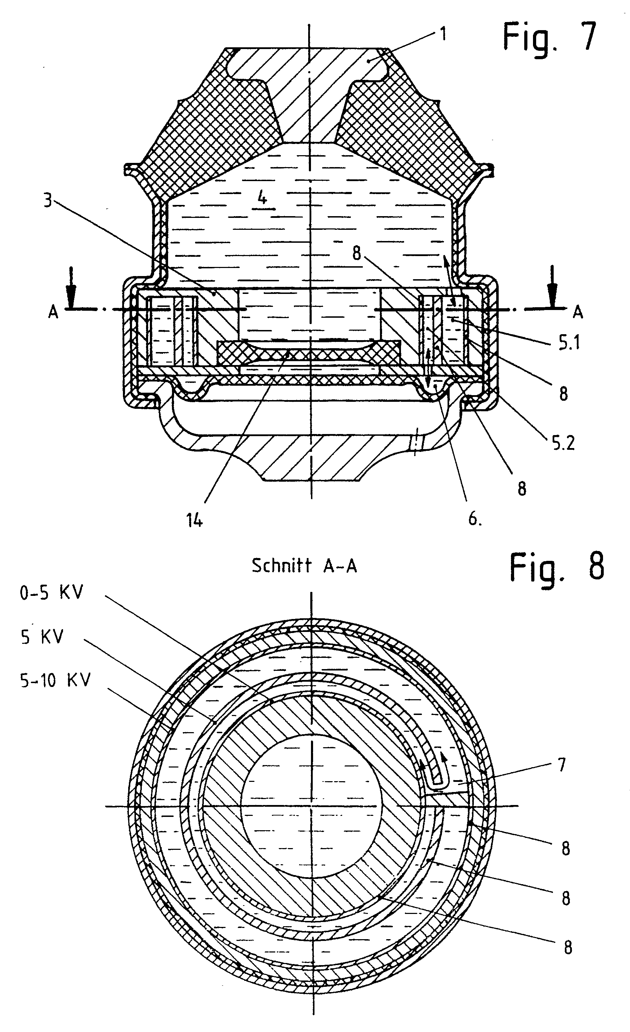

Das in Fig. 7 längsgeschnitten wiedergegebene Gummilager entspricht in seiner äußeren Gestalt den vorstehend beschriebenen Ausführungen. Es ist im Arbeits- 4, im Ausgleichsraum 6 und in der Verbindungsöffnung mit einer elektroviskosen Flüssigkeit der Grundviskosität von 300 mPa x s gefüllt.

Die Verbindungsöffnung zwischen dem Arbeitsraum 4 und dem Ausgleichsraum 6 ist in Teilbereiche 5.1; 5.2 unterteilt, die einander konzentrisch umschließen. Sie werden in radialer Richtung nach innen und in radialer Richtung nach außen von Wänden 8 begrenzt, die in einer hohlzylindrischen Kammer der Trennwand 3 angeordnet sind.

Bei vergleichsweise geringer Baugröße haben die Teilbereiche 5.1; 5.2 durch diese Ausbildung ihrer Wände 8 eine besonders große Länge, in der sie aktiv durchströmbar sind.

Die die beiden Teilbereiche 5.1; 5.2 voneinander trennende Wand 8 ist an einer Stelle des Umfanges weggelassen, wodurch in diesem Bereich ein Pufferraum gebildet ist. In ihm erfolgt zugleich bei einer Ein- bzw. Ausfederung des Traglagers 1 eine Umlenkung der Strömungsrichtung um 180°. Einzelheiten sind aus Fig. 8 entnehmbar, in der das Gummilager gemäß Fig. 7 quergeschnitten wiedergegeben ist. Des weiteren sind in die Fig. 7 und 8 Pfeile eingetragen, welche den Weg beschreiben, den die aus dem Arbeitsraum 4 verdrängte Flüssigkeit bei einer Einfederung des Traglagers 1 in Richtung des Ausgleichsraumes 6 nimmt.

Die die Teilbereiche 5.1; 5.2 in radialer Richtung begrenzenden Wände 8 sind an ein elektrisches Spannungspotential anlegbar, welches in den beiden Teilbereichen 5.1; 5.2 voneinander verschiedene Werte hat. Steuerungsmäßig besteht dadurch die Möglichkeit, nur den einen 5.1, nur den anderen 5.2 oder beide Teilbereiche 5.1 und 5.2 durch die Spannungsquelle anzusteuern, was es gestattet, die insgesamt erzielte Isolierwirkung den im Einzelfalle gegebenen Erfordernissen nochmals besser anzupassen. Beispielsweise für die Verwendung in einem Kraftfahrzeug können hieraus wesentliche Vorteile für den Fahrkomfort entstehen.

Für die steuerbaren Ausführungen des Gummilagers ist es von entscheidender Bedeutung, daß die zur Anwendung gelangende, elektroviskose Flüssigkeit eine Grundviskosität aufweist, die nicht größer ist als 500 mPa x s.

Gelangen Flüssigkeiten in einer größeren Viskosität zur Anwendung, dann gelingt es nicht mehr, die für eine gute Dämpfung erforderliche Resonanzschwingung der in der Verbindungsöffnung enthaltenen Flüssigkeit zu erzielen.

## Patentansprüche

1.  Gummilager, bei dem ein Traglager (1), ein hohlkegeliges Federelement (2) und eine Trennwand (3) einen Arbeitsraum (4) umschließen, bei dem der Arbeitsraum (4) durch eine kanalartig ausgebildete Verbindungsöffnung (5) mit einem nach außen nachgiebig begrenzten Ausgleichsraum (6) verbunden ist und bei dem der Arbeits- (4) und der Ausgleichsraum (6) sowie die Verbindungsöffnung (5) mit einer hydraulischen Flüssigkeit gefüllt und das in der Verbindungsöffnung (5) enthaltene Volumen der Flüssigkeit in eine Resonanzschwingung versetzbar ist, wobei die Verbindungsöffnung (5) wenigstens zwei in Reihe geschaltete Teilbereiche (5.1; 5.2) umfaßt, die sich beiderseits einer Wand (8) parallel zueinander erstrecken, wobei die Teilbereiche (5.1, 5.2) in der gedachten Verlängerung der Wand (8) durch eine eine Richtungsumkehr der strömenden Flüssigkeit bewirkende Übergangszone (7) voneinander getrennt sind und wobei die Übergangszone (7) in Richtung der gedachten Verlängerung der Wand (8) einen Durchlaßquerschnitt aufweist, der eine von dem Durchlaßquerschnitt des in Richtung des Ausgleichsraumes (6) nachgeschalteten Teilbereiches abweichende Größe hat, dadurch gekennzeichnet, daß die Flüssigkeit eine Grundviskosität von maximal 500 mPa x s aufweist, und daß die Übergangszone (7) zu einer Drosselöffnung verengt ist, die höchstens die halbe Größe des Querschnittes der benachbarten Teilbereiche (5.1, 5.2, 5.3) der Verbindungsöffnung (5) aufweist.

2.  Gummilager nach Anspruch 1, dadurch gekennzeichnet, daß wenigstens einer der sich an die Drosselöffnung anschließenden Teilbereiche (5.1; 5.2) durch sich beiderseits parallel zueinander erstreckende Wände (8) begrenzt und zu einem Spalt verengt ist.

3.  Gummilager nach Anspruch 2, dadurch gekennzeichnet, daß der Spalt parallel zur Erstreckung der Wände (8) in Querrichtung eine Breite hat, die wenigstens 15 mal so groß ist wie die senkrecht zur Erstreckung der Wände (8) gemessene Tiefe.

4.  Gummilager nach Anspruch 1 bis 3, dadurch gekennzeichnet, daß die wenigstens einen der Teilbereiche (5.1; 5.2) begrenzenden Wände (8) durch Elektroden gebildet sind, daß die Elektroden an ein elektrisches Spannungspotential anlegbar sind, und daß die enthaltene Flüssigkeit eine elektroviskose Flüssigkeit ist.

5.  Gummilager nach Anspruch 4, dadurch gekennzeichnet, daß das Spannungspotential getaktet aktivierbar ist.

6.  Gummilager nach Anspruch 4 oder 5, dadurch gekennzeichnet, daß mehrere durch Drosselöffnungen voneinander getrennte Teilbereiche (5.1; 5.2; ...) in Reihe hintereinander geschaltet und durch Elektroden begrenzt sind, die an voneinander verschiedene, elektrische Spannungspotentiale anlegbar sind.

7.  Gummilager nach Anspruch 1 bis 6, dadurch gekennzeichnet, daß die Wände (8) aus quer zu ihrer Erstreckung nachgiebigen Platten bestehen und im wesentlichen parallel zur Richtung der Trennwand alternierend in einem Durchbruch eingreifend angeordnet sind, der die Trennwand senkrecht durchdringt.

8. Gummilager nach Anspruch 7, dadurch gekennzeichnet, daß die Platten membranartig gestaltet und aus Gummi erzeugt sind.

9. Gummilager nach Anspruch 7, dadurch gekennzeichnet, daß die Wände (8) zumindest eine Wand (8) umfassen, die in einer im wesentlichen hohlzylindrischen Kammer derart angeordnet ist, daß die einzelnen Teilbereiche (5.1; 5.2; 5.3) einander konzentrisch umschließen.

## Claims

1. A rubber mount, in which a supporting bearing (1), a hollow-conical spring element (2) and a partition wall (3) surround a working space (4), in which the working space (4) is connected to an outwardly flexibly limited compensating space (6) by means of a channel-like connecting orifice (5), and in which the working space (4), compensating space (6) and connecting orifice (5) are filled with a hydraulic fluid and the volume of fluid contained in the connecting orifice (5) can be set in resonance vibration, the connecting orifice (5) comprising at least two series-connected part regions (5.1; 5.2) which extend parallel to one another on both sides of a wall (8), in the imaginary extension of the wall (8) the part regions (5.1, 5.2) being separated from one another by a transitional zone (7) causing a reversal of direction of the flowing fluid, and the transitional zone (7) possessing, in the direction of the imaginary extension of the wall (8), a passage cross-section which has a size differing from the passage cross-section of the part region following in the direction of the compensating space (6), characterised in that the fluid has a basic viscosity of a maximum of 500 mPa x s, and in that the transitional zone (7) is narrowed to a throttle orifice which has at most half the size of the cross-section of the adjacent part regions (5.1, 5.2, 5.3) of the connecting orifice (5).

2. A rubber mount according to claim 1, characterised in that at least one of the part regions (5.1; 5.2) adjacent to the throttle orifice is limited by walls (8) extending parallel to one another on both sides and is narrowed to a gap.

3. A rubber mount according to claim 2, characterised in that the gap possesses parallel to the extension of the walls (8), in the transverse direction, a width which is at least 15 times as large as the depth measured perpendicularly to the extension of the walls (8).

4. A rubber mount according to any of claims 1 to 3, characterised in that the walls (8) limiting at least one of the part regions (5.1; 5.2) are formed by electrodes, in that the electrodes can be applied to an electrical voltage potential, and in that the fluid contained is an electroviscous fluid.

5. A rubber mount according to claim 4, characterised in that the voltage potential can be activated periodically.

6. A rubber mount according to claim 4 or 5, characterised in that a plurality of part regions (5.1; 5.2; ...) separated from one another by throttle orifices are connected successively in series and are limited by electrodes which can be applied to electrical voltage potentials different from one another.

7. A rubber mount according to any of claims 1 to 6, characterised in that the walls (8) are composed of plates flexible transversely relative to their extension and are arranged essentially parallel to the direction of the partition wall alternately and so as to engage in a perforation which passes perpendicularly through the partition wall.

8. A rubber mount according to claim 7, characterised in that the plates are made diaphragm-like and are produced from rubber.

9. A rubber mount according to claim 7, characterised in that the walls (8) comprise at least one wall (8) which is so arranged in an essentially hollow-cylindrical chamber that the individual part regions (5.1; 5.2; 5.3) surround one another concentrically.

## Revendications

1. Support en caoutchouc, comprenant un appui-porteur (1), un élément ressort (2) ayant la forme d'un cône creux et une paroi de séparation (3) qui entourent une chambre de travail (4), laquelle est reliée par une ouverture de communication (5) en forme de canal à une chambre compensatrice (6) délimitée élastiquement vers l'extérieur, lesdites chambres de travail (4), chambre compensatrice (6) et ouverture de communication (5) étant remplies d'un liquide hydraulique, et le volume du liquide contenu dans l'ouverture de communication (5) pouvant être mis en une oscillation de résonance, ladite ouverture de communication (5) comprenant au moins deux zones (5.1, 5.2) qui sont mises en série et qui s'étendent parallèlement de chaque côté d'une paroi (8), lesdites zones (5.1, 5.2) étant séparées entre elles dans le prolongement fictif de la paroi (8) par une zone de passage (7) qui provoque une inversion du sens d'écoulement du liquide, ladite zone de passage (7) représentant dans le prolongement fictif de la paroi (8) une section de passage qui diffère de la section de passage de la zone placée en aval, en direction de la chambre compensatrice (6), caractérisé en ce que le liquide a une viscosité de base d'au maximum 500 mPa x s, et que la zone de passage (7) est rétrécie pour constituer une ouverture d'étranglement qui présente une section au maximum égale à la moitié de la section des zones voisines (5.1, 5.2, 5.3) de l'ouverture de communication (5).

2. Support en caoutchouc selon la revendication 1, caractérisé en ce qu'au moins une des zones (5.1, 5.2) se raccordant à l'ouverture d'étranglement est limitée par des parois (8) s'étendant parallèlement de chaque côté, et qu'elle est rétrécie pour constituer une fente.

3. Support en caoutchouc selon la revendication 2, caractérisé en ce que la fente a parallèlement, à l'extension des parois (8), en direction transversale une largeur qui est au moins égale à 15 fois la profondeur mesurée perpendiculairement à l'extension des parois (8).

4. Support en caoutchouc selon les revendications 1 à 3, caractérisé en ce que les parois (8), limitant au moins une des zones (5.1, 5.2), sont formées d'électrodes, que les électrodes peuvent être mises à un potentiel électrique, et que le liquide contenu est un liquide électrovisqueux.

5. Support en caoutchouc selon la revendication 4, caractérisé en ce que le potentiel électrique peut être activé en cadence.

6. Support en caoutchouc selon la revendication 4 ou 5, caractérisé en ce que plusieurs zones (5.1, 5.2, 5.3) séparées entre elles par des ouvertures d'étranglement, sont mises en série et limitées par des électrodes qui peuvent être mises à des potentiels électriques distincts entre eux.

7. Support en caoutchouc selon les revendications 1 à 6, caractérisé en ce que les parois (8) sont constituées de plaques élastiques dans le sens transversal à leur extension et qui sont disposées, dans l'essentiel, parallèlement à la direction de la paroi de séparation avec pénétration alternante dans un percement qui traverse la paroi de séparation perpendiculairement.

8. Support en caoutchouc selon la revendication 7, caractérisé en ce que les plaques ont la forme de membranes et sont exécutées en caoutchouc.

9. Support en caoutchouc selon la revendication 7, caractérisé en ce que les parois (8) comprennent au moins une paroi (8) qui est disposée dans une chambre, ayant dans l'essentiel la forme d'un cylindre creux, de façon que les zones (5.1, 5.2, 5.3) se renferment concentriquement.

Fig. 1

EP 0 312 719 B1

Fig. 2

DYN. FEDERRATE

Frequenz in Hz

EP 0 312 719 B1

# Fig. 3

Schnitt A-A

# Fig. 4

Fig. 5

Schnitt A-A

Fig. 6

Fig. 7

Fig. 8

Schnitt A-A

0-5 KV

5 KV

5-10 KV